(19) **Europäisches Patentamt / European Patent Office / Office européen des brevets**

(11) **EP 2 081 397 B1**

(12) **EUROPEAN PATENT SPECIFICATION**

(45) Date of publication and mention
of the grant of the patent:
**11.04.2012 Bulletin 2012/15**

(51) Int Cl.:
**H04W 28/02** *(2009.01)*    *H04W 52/34* *(2009.01)*

(21) Application number: **07817358.0**

(22) Date of filing: **04.12.2007**

(86) International application number:
**PCT/CN2007/071168**

(87) International publication number:
**WO 2008/098461 (21.08.2008 Gazette 2008/34)**

(54) **AN UPLINK LOAD CONTROL METHOD AND APPARATUS**

EIN AUFWÄRTSSTRECKENLASTKONTROLLVERFAHREN UND GERÄT

PROCÉDÉ ET APPAREIL DE COMMANDE DE CHARGE DE LIAISON MONTANTE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.02.2007 CN 200710079270**

(43) Date of publication of application:
**22.07.2009 Bulletin 2009/30**

(73) Proprietor: **Huawei Technologies Co., Ltd.**
**Shenzhen, Guangdong Province 518129 (CN)**

(72) Inventors:
• **LU, Ganzhong**
**Shenzhen**
**Guangdong Province 518129 (CN)**
• **ZHANG, Jingrong**
**Shenzhen**
**Guangdong Province 518129 (CN)**

(74) Representative: **Pfenning, Meinig & Partner GbR**
**Patent- und Rechtsanwälte**
**Theresienhöhe 13**
**80339 München (DE)**

(56) References cited:
EP-A2- 1 708 536     WO-A1-2006/030914
WO-A1-2006/077141    WO-A2-2008/085277
CN-A- 1 354 570      CN-A- 1 377 150
CN-A- 1 479 464      CN-A- 101 026 888

• LUCENT TECHNOLOGIES: "Non scheduled EDCH load" 3GPP DRAFT; R2-051381, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20050505, 5 May 2005 (2005-05-05), XP050128588 [retrieved on 2005-05-05]
• SIEMENS ET AL: "Introduction of a Node B measurement for E-DCH RRM" 3GPP DRAFT; 25319_CR0001_(REL-7), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Tallinn; 20060819, 19 August 2006 (2006-08-19), XP050102506 [retrieved on 2006-08-19]

**Description**

**Field of the Invention**

The present invention relates to a radio resource management technology, and in particular, to a method and apparatus for uplink load control.

**Background of the Invention**

In a radio communication system, radio resources are very precious. It is a critical technology to serve more users and guarantee the quality of service (QoS) for each user. The usual practice is to perform load control. The load control is generally divided into uplink load control and downlink load control. The uplink load control includes uplink admission control and congestion control.

The uplink admission control, based on the uplink received total wideband power (RTWP) in a cell, is to control newly accessed users so as to guarantee the QoS for the existing users. According to the uplink admission control, if the RTWP in the cell exceeds a certain threshold, access requests of new users are rejected. Specifically, supposing the current RTWP is $P_{total}$ and the estimated increase of RTWP is $\Delta P$ upon admission of new users, if formula 1 below is satisfied, new users are admitted; otherwise new users are not admitted.

$$P_{total} + \Delta P < Thd \cdot P_{max}$$

(1)

$P_{max}$ refers to the maximum received total wideband power in a cell. *Thd* refers to the preset threshold, which ranges from 0 to 1.

The congestion control; also based on the RTWP in a cell, is to reduce the cell load when the cell load reaches a certain level so as to improve the system stability. Supposing the current RTWP in the cell is $P_{total}$, if formula 2 below is satisfied, the congestion control is triggered.

$$P_{total} > Thd \cdot P_{max}$$

(2)

At the earlier stage of 3G system design, the preceding load control based on the RTWP is indeed effective: Nevertheless, with the evolution of 3GPP standards, more and more enhanced functions are added to the protocols. The introduction of high speed uplink packet access (HSUPA) technology is one of the major functions. This greatly increases the uplink throughput of a wideband code division multiple access (WCDMA) system, but has an enormous impact on the preceding RTWP-based load control method.

The scheduling feature of HSUPA enables the system to always operate at a higher target RTWP $RTWP_{target}$. In this case, larger system capacity and wider coverage are available. During the application of HSUPA, the inventor finds the following problems when using the RTWP-based load control method in the HSUPA with the scheduling feature: even if there are few users in the system, the actual system load is light and the system RTWP may be high. Thus, it is impossible to measure the load of the current cell directly by using the RTWP, and perform effective load control.

A PCT application (WO 2006/077141 A1) discloses a cellular telecommunication system and a method, and the method embodiment comprises the steps of receiving, by one of the base station components from the at least one radio network controlling component, at least one interference control parameter, of generating one or more scheduling grants taking into account the at least one interference contol parameter, and of issuing the one or more scheduling grants to one or more user terminals.

**Summary of the Invention**

The present invention provides a method and apparatus for uplink load control to effectively control the uplink load.

The method includes:

decomposing an uplink received total wideband power in a cell ; and
performing uplink load control by using power components after decomposition characterized in that the process of decomposing the uplink received total wideband power in a cell comprises:

obtaining, from the uplink received, total wideband power $P_{total}$ in the cell, the uncontrollable receiving power $P_{non\text{-}ctrl}$, the receiving power of the uplink non-serving enhanced dedicated channel (E-DCH) $P_{EDCH,f}$, the receiving power $GBP_{scheduled}$ derived from the minimum required power (GBP) for the guaranteed bit rates of all the scheduled services on the E-DCH.

The apparatus includes: a decomposing unit and a load control unit, wherein,
the decomposing unit is adapted to decompose an uplink received total wideband power in a cell ;
the load control unit is adapted to perform uplink load control by using power components after decomposition
characterized in that the process of decomposing the uplink received total wideband power in a cell comprises:
obtaining, from the uplink received total wideband power $P_{total}$ in the cell, the uncontrollable receiving power $P_{non\text{-}ctrl}$, the receiving power of the uplink non-serving enhanced dedicated channel (E-DCH) $P_{EDCH,f}$, the receiving power $GB\text{-}P_{scheduled}$ derived from the minimum required power (GBP) for the guaranteed bit rates of all the scheduled services on the E-DCH.

According to the method and apparatus for uplink load control provided by the embodiments of the present invention, after the uplink received total wideband power is decomposed into different power components, uplink load control is performed according to the different power components. In this case, the load control can be effectively performed according to the actual system load situation, thus improving the QoS and the system stability.

## Brief Description of the Drawings

Figure 1 shows decomposition of the RTWP in an HSUPA cell in an embodiment of the present invention;
Figure 2 shows a process of uplink admission control in embodiment 1 of the present invention;
Figure 3 shows a process of uplink admission control in embodiment 2 of the present invention;
Figure 4 shows a process of uplink admission control in embodiment 3 of the present invention;
Figure 5 shows a process of uplink admission control in embodiment 4 of the present invention;
Figure 6 shows a triggering process of basic congestion control in a cell in embodiment 5 of the present invitation;
Figure 7 shows a trig gering process of overload congestion control in a cell in embodiment 6 of the present invitation; and

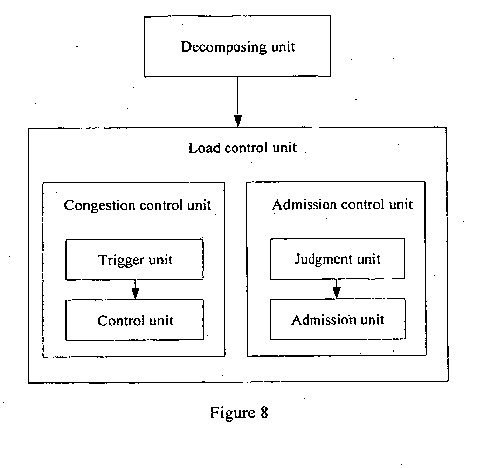

Figure 8 shows structure of an apparatus for uplink load control in embodiment 7 of the present invitation.

## Detailed Description of the Invention

For better understanding of the technical solution and merits of the present invention, the present invention is hereinafter described in detail with reference to the embodiments.
An embodiment of the present invention decomposes the RTWP in a cell and performs uplink load control by using power components after composition.
An embodiment of the present invention provides a method for uplink load control in an HSUPA cell. Note that the HSUPA channel is also called enhanced dedicated channel (E-DCH).

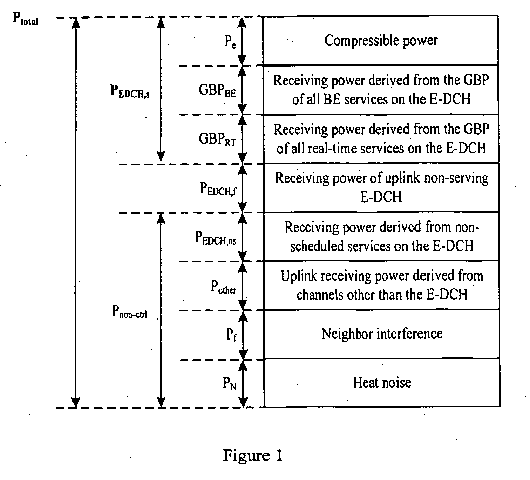

Figure 1 shows the decomposition of the RTWP in an HSUPA cell. As shown in Figure 1, the embodiment decomposes the RTWP of the HSUPA cell into the following three power components:

the receiving power derived from all the scheduled services on the E-DCH, indicated as $P_{EDCH,s}$;
the receiving power of the uplink non-serving E-DCH, indicated as $P_{EDCH,f}$; and the uncontrollable receiving power, indicated as $P_{non\text{-}ctrl}$.
$P_{EDCH,f}$ is a reserved power component. As an implementation mode, this receiving power may be manually set, for example, it may be set to zero. It is understandable that $P_{EDCH,f}$ ma y be set in other modes, and may be set to a non-zero value.
$P_{non\text{-}ctrl}$ includes four power components: heat noise PN, neighbor interference Pf, uplink receiving power derived from channels other than the E-DCH Pother, and receiving power derived from non-scheduled services on the E-DCH PEDCH,ns.

If the RTWP is indicated as $P_{total}$, $P_{non\text{-}ctrl}$ can be calculated by formula 3:

$$P_{non-ctrl} = P_{total} - P_{EDCH,s} - P_{EDCH,f} \qquad (3)$$

$P_{EDCH,s}$ is further decomposed into two power components:

receiving power derived from the minimum required power (GBP) for the guaranteed bit rates of all the scheduled services on the E-DCH, hereinafter referred to as the receiving power derived from the GBP of all the scheduled services on the E-DCH, and indicated as $GBP_{scheduled}$; and
compressible power, indicated as Pe.

The scheduled services on the E-DCH are categorized into real-time service and best-effort (BE) service. Therefore, the receiving power derived from the GBP of all the scheduled services on the E-DCH may be further decomposed into two power components:

receiving power derived from the GBP of all the BE services on the E-DCH, indicated as $GBP_{BE}$; and
receiving power derived from the GBP of all the real-time services on the E-DCH, indicated as $GBP_{RT}$.

In this way, Pe satisfies formula 4:

$$Pe = P_{EDCH,s} - GBP_{scheduled} = P_{EDCH,s} - GBP_{BE} - GBP_{RT} \qquad (4)$$

Based on the preceding process of decomposing RTWP, the power components for uplink load control include $P_{non-ctrl}$ and $GBP_{scheduled}$. Specifically, the power components for uplink load control include $P_{non-ctrl}$, $GBP_{BE}$ and $GBP_{RT}$.

The following describes the embodiments of uplink load control in detail according to the power components after composition. The method for uplink admission control is described first:

During the uplink admission control, the services originating access requests are categorized into real-time service and BE service. The scheduling priority in the HSUPA varies with the service type. In this case, different power components may be considered for different service types. For example, $GBP_{RT}$ should be considered for the real-time service. $GBP_{BE}$ and $GBP_{RT}$ should be considered for the BE service.

During the uplink admission control, the admission conditions vary with the types of channels where the services originating access requests are located. For example, to prevent the services on the DCH from preempting the services on the E-DCH, it is necessary to add admission conditions.

**Embodiment 1:**

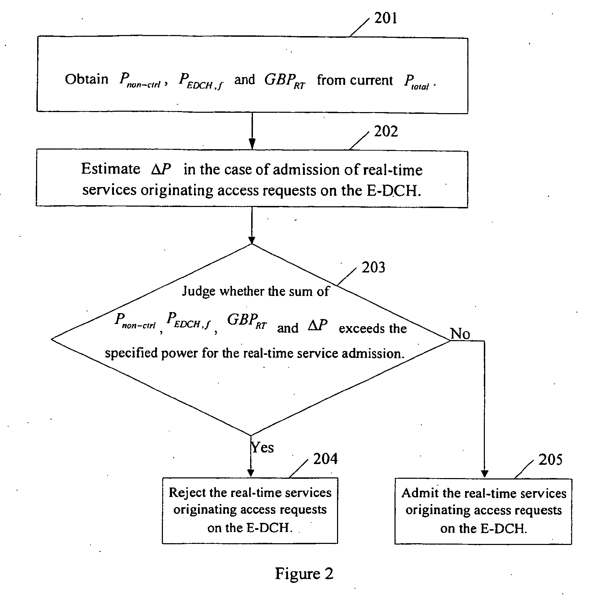

Figure 2 shows the process of uplink admission control in embodiment 1. As shown in Figure 2, when the services originating access requests are real-time services on the E-DCH (not including real-time services carried on the E-DCH in a non-scheduling mode), the admission control is implemented through the following steps. The real-time services may be streaming services or conversational services, such as voice over IP (VoIP) service.

Step 201: $P_{non-ctrl}$, $P_{EDCH,f}$ and $GBP_{RT}$ are obtained from current $P_{total}$
$P_{non-ctrl}$ is obtained as follows: Obtain $P_{total}$, $P_{EPCH,s}$ and $P_{EDcH,f}$. Then subtract $P_{EDCH,s}$ and $P_{EDCH,f}$ from $P_{total}$ to obtain $P_{non-ctrl}$.
Step 202: $\Delta P$ is estimated in the case of admission of the real-time services originating access requests on the E-DCH.
Step 203: It is judged whether the sum of $P_{non-ctrl}$, $P_{EDCH,f}$, $GBP_{RT}$, and $\Delta P$ exceeds the specified power for the real-time service admission. If yes, step 204 is performed; otherwise, step 205 is performed.

The power for the real-time service admission is equal to $Thd_{RT}$ times $RTWP_{target}$. Formula 5 below shows the judgment condition in step 203.

$$P_{non-ctrl} + P_{EDCH,f} + GBP_{RT} + \Delta P < Thd_{RT} \cdot RTWP_{target} \qquad (5)$$

$RTWP_{target}$ refers to the target RTWP. $Thd_{RT}$ refers to the power threshold for real-time service admission. $Thd_{RT}$ ma y range from 0 to 1 or be greater than 1.

Step 204: The real-time services originating access requests on the E-DCH are rejected.

Step 205: The real-time services originating access requests on the E-DCH are admitted.

In embodiment 1, in the case of admission control for the real-time services on the E-DCH, $GBP_{RT}$ is considered besides $P_{non-ctrl}$. This ensures that reasonable admission control is performed for real-time services on the E-DCH.

## Embodiment 2:

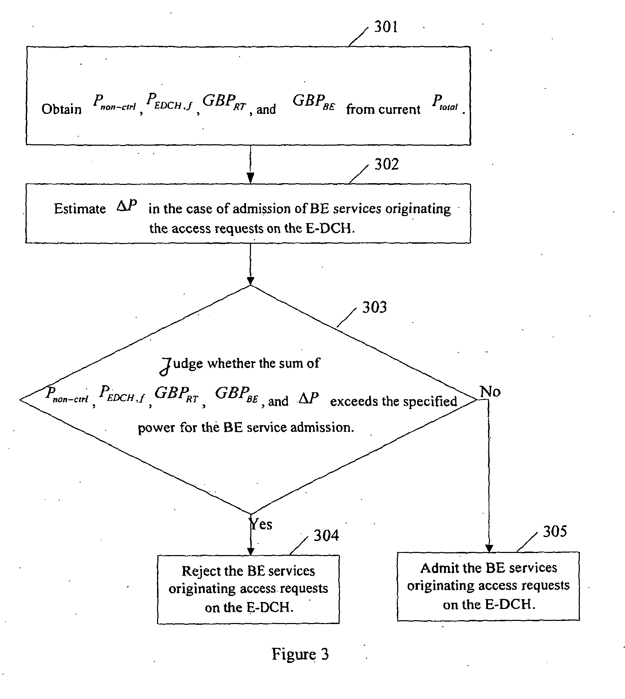

Figure 3 shows the process of uplink admission control in embodiment 2. As shown in Figure 3, when the services originating access requests are BE services on the E-DCH, the admission control is implemented through the following steps. The BE services may be interactive services or background services.

Step 301: $P_{non-ctrl}$, $P_{EDCH,f}$ $GBP_{RT}$, and $GBP_{BE}$ are obtained from current $P_{total}$.

Step 302: $\Delta P$ is estimated in the case of admission of BE services originating access requests on the E-DCH.

Step 303: It is judged whether the sum of $P_{non-ctrl}$, $P_{EDCH,f}$, $GBP_{RT}$ $GBP_{BE}$, and $\Delta P$ exceeds the specified power for the BE service admission. If yes, step 304 is performed; otherwise, step 305 is performed.

The power for the BE service admission is equal to $Thd_{BE}$ times $RTWP_{target}$. Formula 6 below shows the judgment condition in step 303.

$$P_{non-ctrl} + P_{EDCH,f} + GBP_{RT} + GBP_{BE} + \Delta P < Thd_{BE} \cdot RTWP_{target} \tag{6}$$

$RTWP_{target}$ refers to the target RTWP. $Thd_{BE}$ refers to the power threshold for BE service admission. $Thd_{BE}$ may range from 0 to 1 or be greater than 1.

Step 304: The BE services originating access requests on the E-DCH are rejected.

Step 305: The BE services originating access requests on the E-DCH are admitted.

In embodiment 2, in the case of admission control for the BE services on the E-DCH, because the BE services have a lower priority than the real-time services, $GBP_{BE}$ and $GBP_{RT}$ should be considered besides $P_{non-ctrl}$. This ensures that reasonable admission control is performed for BE services on the E-DCH.

## Embodiment 3:

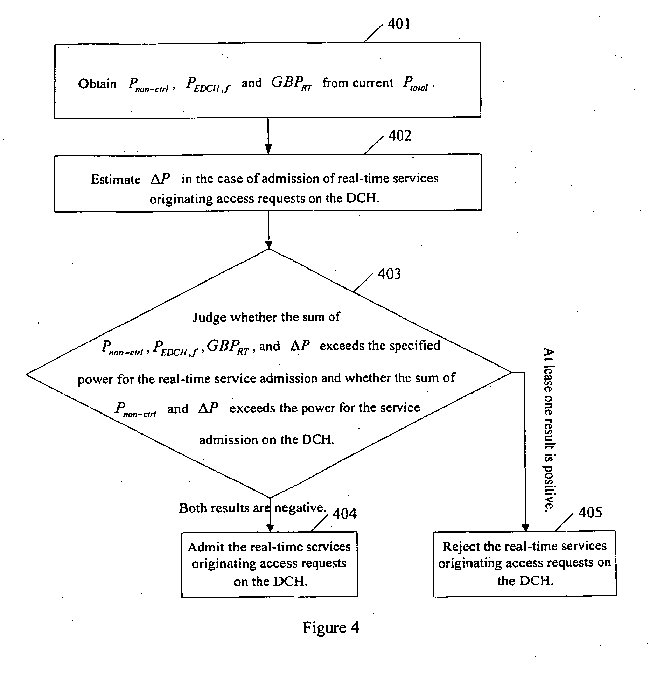

Figure 4 shows the process of uplink admission control in embodiment 3. As shown in Figure 4, when the services originating access requests are real-time services on the DCH, the admission control is implemented through the following steps. The real-time services may be streaming services or conversational services.

Step 401: $P_{non-ctrl}$, $P_{EDH,f}$ and $GBP_{RT}$ are obtained from current $P_{total}$.

Step 402: $\Delta P$ is estimated in the case of admission of real-time services originating access requests on the DCH.

Step 403: It is judged whether the sum of $P_{non-ctrl}$, $P_{EDCH,f}$, $GBP_{RT}$ and $\Delta P$ exceeds the specified power for the real-time service admission and whether the sum of $P_{non-ctrl}$ and $\Delta P$ exceeds the specified power for the service admission on the DCH. If the two results are negative, step 404 is performed; otherwise, step 405 is performed.

The power for real-time service admission is equal to $Thd_{RT}$ times $RTWP_{target}$. The power for service admission on the DCH is equal to $Thd_{non-ctrl}$ times $RTWP_{target}$.

Formula 5 above and formula 7 below show the judgment condition in step 403.

$$P_{non-ctrl} + \Delta P < Thd_{non-ctrl} \cdot RTWP_{target} \tag{7}$$

$RTWP_{target}$ refers to the target RTWP. $Thd_{non-ctrl}$ refers to the service admission threshold on the DCH. $Thd_{non-ctrl}$ may range from 0 to 1 and be greater than 1.

The judgments in step 403 may be performed in the following sequence: It is judged whether formula 5 is satisfied. If formula 5 is not satisfied, the process skips to step 405. Otherwise, it is further judged whether formula 7 is satisfied. If formula 7 is satisfied, step 404 is performed; otherwise, the process skips to step 405.

Besides, the judgments in step 403 may be performed in the following sequence: It is judged whether formula 7 is satisfied. If formula 7 is not satisfied, step 405 is performed. Otherwise, it is further judged whether formula 5 is satisfied. If formula 5 is satisfied, step 404 is performed; otherwise, the process skips to step 405.

Step 404: The real-time services originating access requests on the DCH are admitted.

Step 405: The real-time services originating access requests on the DCH are rejected.

In embodiment 3, in the case of admission control for the real-time services on the DCH, besides the same conditions for the admission of real-time services on the E-DCH, the condition in formula 7 should be considered so that services on the DCH can be prevented from preempting services on the E-DCH. In embodiment 3, $Thd_{RT}$ and $Thd_{non-ctrl}$ are set properly. This can prevent services on the DCH from preempting services on the E-DCH and satisfy the judgment condition for the total power.

The admission control process for the non-scheduled services on the E-DCH is the same as that in Figure 4, so it is omitted here.

**Embodiment 4:**

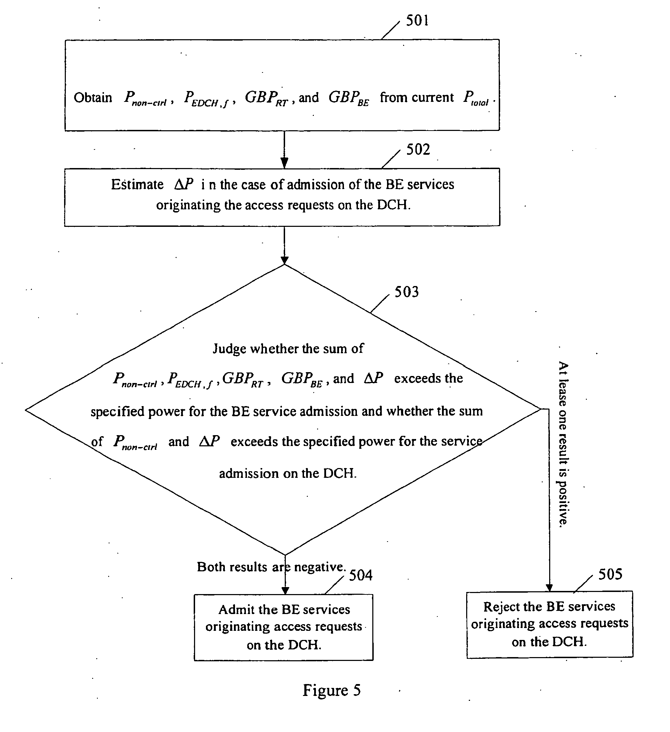

Figure 5 shows the process of uplink admission control in embodiment 4. As shown in Figure 5, when the services originating access requests are BE services on the DCH, the admission control is implemented through the following steps. The BE services may be interactive services or background services.

Step 501: $P_{non-ctrl}$, $P_{EDCH,f}$, $GBP_{RT}$, and $GBP_{BE}$ are obtained from current $P_{total}$.

Step 502: $\Delta P$ is estimated in the case of admission of the BE services originating access requests on the DCH.

Step 503: It is judge whether the sum of $P_{non-ctrl}$, $P_{EDCH,f}$ $GBP_{RT}$ $GBP_{BE}$, and $\Delta P$ exceeds the specified power for the BE service admission and whether the sum of $P_{non-ctrl}$ and $\Delta P$ exceeds the specified power for the service admission on the DCH. If the two results are negative, step 504 is performed; otherwise, step 505 is performed.

The power for the BE service admission is equal to $Thd_{BE}$ times $RTWP_{target}$. The power for the service admission on the DCH is equal to $Thd_{non-ctrl}$ times $RTWP_{target}$.

Formula 6 and formula 7 show the judgment condition in step 503.

The judgments in step 503 may be performed in the following sequence: It is judged whether formula 6 is satisfied. If formula 6 is not satisfied, the process skips to step 505. Otherwise, it is further judged whether formula 7 is satisfied. If formula 7 is satisfied, step 504 is performed; otherwise, the process skips to step 505.

Besides, the judgments in step 503 may be performed in the following sequence: It is Judged whether formula 7 is satisfied. If formula 7 is not satisfied, the process skips to step 505. Otherwise, it is further judged whether formula 6 is satisfied. If formula 6 is satisfied, step 504 is performed; otherwise, the process skips to step 505.

Step 504: The BE services originating access requests on the DCH are admitted.

Step 505: The BE services originating access requests on the DCH are rejected.

In embodiment 4, in the case of admission control for the BE services on the DCH, besides the same conditions for the admission of BE services on the E-DCH, the condition in formula 7 should be considered so that services on the DCH can be prevented from preempting services on the E-DCH. $Thd_{BE}$ and $Thd_{non-ctrl}$ are set properly in embodiment 4, the same as in embodiment 3. This can prevent services on the DCH from preempting services on the E-DCH and satisfy the judgment condition for the total power.

In preceding embodiments 1 to 4, in the case of uplink admission control, $P_{total}$ is decomposed into different power components. Besides, admission control is performed for services of different priorities by using different power components. This can perform reasonable admission control and improve the QoS of the service.

The following describes the embodiments of congestion control in detail according to the power components after composition.

**Embodiment 5:**

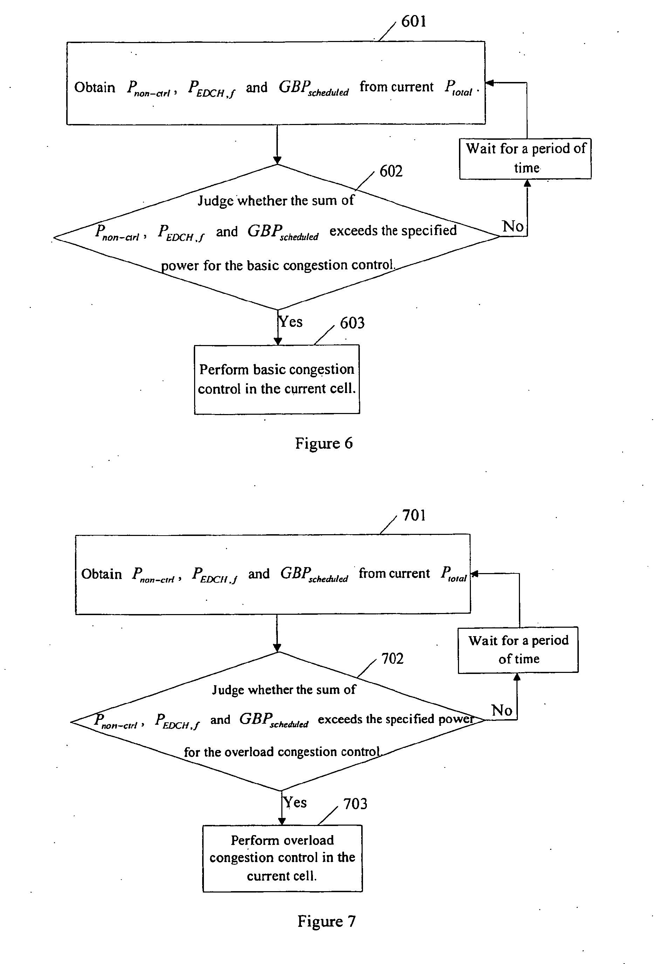

Figure 6 shows the triggering process of basic congestion control in a cell in embodiment 5. As shown in Figure 6, in embodiment 5, the basic congestion control is triggered in a cell through the following steps:

Step 601: $P_{non-cirl}$, $P_{EDCH,f}$ and $GBP_{scheduled}$ are obtained from current $P_{total}$.
Step 602: It is judged whether the sum of $P_{non-ctrl}$, $P_{EDCH,f}$ and $GBP_{scheduled}$ exceeds the specified power for the basic congestion control. If yes, step 603 is performed; otherwise, step 601 is performed after waiting for a period of time.

The power for the basic congestion control is equal to $Thd_{BasicCongestion}$ times $RTWP_{target}$.

Formula 8 shows the judgment condition in step 602.

$$P_{non-ctrl} + P_{EDCH,f} + GBP_{scheduled} > Thd_{BasicCongestion} \cdot RTWP_{target} \tag{8}$$

In step 602, if $GBP_{RT}$ and $GBP_{BE}$ are obtained, formula 9 below may also be used for judgment.

$$P_{non-ctrl} + P_{EDCH,f} + GBP_{RT} + GBP_{BE} > Thd_{BasicCongestion} \cdot RTWP_{target} \tag{9}$$

$Thd_{BasicCongestion}$ refers to the preset basic congestion control threshold. $Thd_{BasicCongestion}$ may range from 0 to 1 or be greater than 1.

Step 603: Basic congestion control is performed in the current cell.

When the cell load satisfies formula 8 or formula 9, the system triggers the basic congestion control in the cell to lower the cell load.

**Embodiment 6:**

Figure 7 shows the triggering process of overload congestion control in a cell in embodiment 6. As shown in Figure 7, in embodiment 6, the overload congestion control is triggered in a cell through the following steps:

Step 701: $P_{non-ctrl}$, $P_{EDCH,f}$ and $GBP_{scheduled}$ are obtained from current $P_{total}$
Step 702: It is judged whether the sum of $P_{non-ctrl}$, $P_{EDCH,f}$ and $GBP_{scheduled}$ exceeds the specified power for the overload congestion control. If yes, step 703 is performed; otherwise, step 701 is performed after waiting for a period of time.

The power for the overload congestion control is equal to $Thd_{OverloadCongestion}$ times $RTWP_{target}$.

Formula 10 shows the judgment condition in step 702.

$$P_{non-ctrl} + P_{EDCH,f} + GBP_{scheduled} > Thd_{OverloadCongestion} \cdot RTWP_{target} \tag{10}$$

In step 702, if $GBP_{RT}$ and $GBP_{BE}$ are obtained, formula 11 below may also be used for judgment.

$$P_{non-ctrl} + P_{EDCH,f} + GBP_{RT} + GBP_{BE} > Thd_{OverloadCongestion} \cdot RTWP_{target} \tag{11}$$

$Thd_{OverloadCongestion}$ refers to the preset overload congestion control threshold. Its value is generally greater than 1.

Step 703: Overload congestion control is performed in the current cell.

When the cell load satisfies formula 10 or formula 11, the system triggers the overload congestion control in the cell to lower the cell load.

In preceding embodiments 5 and 6 as shown in Figure 6 and Figure 7, only the conditions for triggering basic congestion control and overload congestion control are provided. Nevertheless, a number of methods may be used for congestion control. No limit is set here.

In preceding embodiments 5 and 6, in the case of congestion control, the uplink received total wideband power is decomposed into different power components. Besides, the uncontrollable power component and the received total wideband power derived from the GBP of services on the E-DCH are considered. The actual receiving power derived from services on the E-DCH is not considered. In this case, the congestion control can be performed according to the actual system load situation. Thus, effective load control can be performed and the system stability can be improved.

In preceding embodiments 1 to 6, the power calculated by the target uplink received total wideband power times the threshold is used as the comparative power in the uplink load control. In the admission control or congestion control for different services, effective load control can be performed when a proper threshold is set according to the actual system situation.

**Embodiment 7:**

In embodiment 7, the structure of an apparatus for uplink load control is provided. As shown in Figure 7, the apparatus includes a decomposing unit and a load control unit. The decomposing unit decomposes the uplink received total wideband power in a cell. The load control unit performs load control by using the power components after composition.

The load control unit includes a congestion control unit. The congestion control unit uses the power components after composition to perform congestion control. Specifically, the congestion control unit includes a trigger unit and a control unit. The trigger unit uses the power components after composition to judge that the current cell load meets the conditions for triggering the congestion control. It sends the trigger information to the control unit. The control unit then performs congestion control.

The load control unit further includes an admission control unit. The admission control unit uses the power components after composition to perform admission control. Specifically, the admission control unit includes a judgment unit and an admission unit. The judgment unit uses the power components after composition to judge whether the cell load meets the admission conditions upon the admission of services originating access requests. It sends the admission information to the admission unit. The admission unit then admits the services.

**Claims**

1. A method for uplink load control, comprising:

   decomposing an uplink received total wideband power in a cell ; and
   performing uplink load control by using power components after decomposition
   **characterized in that** the process of decomposing the uplink received total wideband power in a cell comprises:
   obtaining, from the uplink received total wideband power, $P_{total}$, in the cell, the uncontrollable receiving power, $P_{non-ctrl}$, the receiving power of the uplink non-serving enhanced dedicated channel, E-DCH, $P_{EDCH,f}$, the receiving power, $GBP_{scheduled}$, derived from the minimum required power, GBP, for the guaranteed bit rates of all the scheduled services on the E-DCH.

2. The method according to claim 1, wherein the process of performing uplink load control by using the power components after decomposition comprises:

   performing(603,703) congestion control by using the power components after decomposition.

3. The method according to claim 2, wherein the process of performing congestion control by using the power components after decomposition comprises:

   if the sum of $P_{non-ctrl}$, $P_{EDCH,f}$ and $GBP_{scheduled}$ exceeds a power for the congestion control, performing congestion control.

4. The method according to claim 3, wherein
   when performing(603) the basic congestion control, the power for the congestion control is equal to $Thd_{BasicCongestion}$ times $RTWP_{target}$ ;
   when performing(703) the overload congestion control, the power for the congestion control is equal to $Thd_{OverloadCongestion}$ times $RTWP_{target}$.

5. The method according to claim 1, wherein the receiving power $GBP_{scheduled}$ comprises:

   the receiving power derived from the GBP of all the real-time services on the E-DCH $GBP_{RT}$, and
   the receiving power derived from the GBP of all the BE services on the E-DCH $GBP_{BE}$.

6. The method according to claim 5, wherein the process of performing uplink load control by using the power components after decomposition comprises:

   performing uplink admission control by using the power components after decomposition.

7. The method according to claim 6, wherein when the services originating access requests are real-time services, the process of performing uplink admission control comprises:

   estimating(202) $\Delta P$ in the case of admission of the real-time services originating access requests;
   judging(203) whether the sum of $P_{non-ctrl}$, $P_{EDCH,f}$ $GBP_{RT}$, and $\Delta P$ exceeds a power for the real-time service admission, if no, admitting(205) the real-time services originating access requests; otherwise, rejecting(204) the real-time services originating access requests.

8. The method according to claim 7, wherein the power for the real-time service admission is equal to $Thd_{RT}$ times $RTWP_{target}$.

9. The method according to claim 6, wherein when the services originating access requests are real-time services on the DCH, performing uplink admission control comprises:

estimating(402) $\Delta P$ in the case of admission of the real-time services originating access requests on the DCH;
judging(403) whether the sum of $P_{non\text{-}ctrl}$, $P_{EDCH,F}$ $GBP_{RT}$ and $\Delta P$ exceeds a power for the real-time service admission and whether the sum of $P_{non\text{-}ctrl}$ and $\Delta P$ exceeds a power for the service admission on the DCH, if the two results are negative, admitting(404) the real-time services originating access requests on the DCH; otherwise, rejecting(405) the real-time services originating access requests on the DCH.

10. The method according to claim 9, wherein the power for real-time service admission is equal to $Thd_{RT}$ times $RTW_{target}$ ; and
the power for service admission on the DCH is equal to $Thd_{non\text{-}ctrl}$ times $RTWp_{target}$.

11. The method according to claim 6, wherein when the services originating access requests are BE services, the process of performing uplink admission control comprises:

estimating(302) $\Delta P$ in the case of admission of BE services originating access requests;
judging(303) whether the sum of $P_{non\text{-}ctrl}$, $P_{EDCH,f}$, $GBP_{RT}$, $GBP_{BE}$, and $\Delta P$ exceeds a power for the BE service admission, if no, admitting(305) the BE services originating access requests; otherwise, rejecting(304) the BE services originating access requests.

12. The method according to claim 11, wherein the power for the BE service admission is equal to $Thd_{BE}$ times $RTWP_{target}$.

13. The method according to claim 6, wherein when the services originating access requests are BE services on the DCH, the process of performing uplink admission control comprises:

estimating(502) $\Delta P$ in the case of admission of the BE services originating access requests on the DCH;
judging(503) whether the sum of $P_{non\text{-}ctrl}$, $P_{EDCH,f}$ $GBP_{RT}$, $GBP_{BE}$, and $\Delta P$ exceeds a power for the BE service admission and whether the sum of $P_{non\text{-}ctrl}$ and $\Delta P$ exceeds a power for the service admission on the DCH, if the two results are negative, admitting(504) the BE services originating access requests on the DCH; otherwise, rejecting(505) the BE services originating access requests on the DCH.

14. The method according to claim 13, wherein the power for the BE service admission is equal to $Thd_{BE}$ times $RTWP_{target}$ ; and
the power for the service admission on the DCH is equal to $Thd_{non\text{-}ctrl}$ times $RTWP_{target}$.

15. An apparatus for uplink load control, comprising a decomposing unit and a load control unit, wherein,
the decomposing unit adapted to decompose an uplink received total wideband power in a cell ;
the load control unit is adapted to perform uplink load control by using power components after decomposition **characterized in that** the decomposing unit is adapted to decompose the uplink received total wideband power in a cell by obtaining, from the uplink received total wideband power, $P_{total}$, in the cell, the uncontrollable receiving power, $P_{non\text{-}ctrl}$, the receiving power of the uplink non-serving enhanced dedicated channel, E-DCH, $P_{EDCH,f}$, the receiving power, $GBP_{scheduled}$, derived from the minimum required power, GBP, for the guaranteed bit rates of all the scheduled services on the E-DCH.

16. The apparatus according to claim 15, the load control unit comprising a congestion control unit, wherein the congestion control unit is adapted to use the power components after decomposition to perform congestion control.

17. The apparatus according to claim 16, wherein the congestion control unit comprises a trigger unit and a control unit; wherein
the trigger unit is adapted to use the power components after decomposition to judge that the current cell load meets the conditions for triggering the congestion control and send the trigger information to the control unit; and

the control unit is adapted to perform congestion control.

**18.** The apparatus according to claim 17, wherein the load control unit comprises an admission control unit; and the admission control unit is adapted to use the power components after decomposition to perform admission control.

**19.** The apparatus according to claim 18, wherein the admission control unit comprises a judgment unit and an admission unit; wherein
the judgment unit is adapted to use the power components after decomposition to judge whether the cell load meets the admission conditions upon the admission of services originating access requests and send the admission information to the admission unit; and
the admission unit is adapted to admit the services.

**Patentansprüche**

**1.** Verfahren zur Aufwärtsstrecken-Lastregelung, umfassend:

Zerlegen einer Aufwärtsstrecken-Empfangs-Gesambreitbandleistung in einer Zelle; und
Durchführen von Aufwärtsstrecken-Lastregelung durch Verwendung von Leistungskomponenten nach Zerlegung,

**dadurch gekennzeichnet, dass** der Prozess des Zerlegens der Aufwärtsstrecken-Empfangs-Gesamtbreitbandleistung in einer Zelle Folgendes umfasst:

Erhalten der unregelbaren Empfangsleistung $P_{non-ctrl}$, der Empfangsleistung des nichtversorgenden Enhanced Dedicated Channel E-DCH der Aufwärtsstrecke $P_{EDCH,f}$ der Empfangsleistung $GBP_{scheduled}$, die aus der minimalen erforderlichen Leistung GBP für die garantierten Bitraten aller eingeteilter Dienste auf dem E-DCH abgeleitet wird, aus der Aufwärtstrecken-Empfangs-Gesamtbreitbandleistung $P_{total}$ in der Zelle.

**2.** Verfahren nach Anspruch 1, wobei der Prozess des Durchführens von Aufwärtsstrecken-Lastregelung durch Verwendung der Leistungskomponenten nach Zerlegung Folgendes umfasst:

Durchführen (603, 703) von Stauregelung durch Verwendung der Leistungskomponenten nach Zerlegung.

**3.** Verfahren nach Anspruch 2, wobei der Prozess des Durchführens von Stauregelung durch Verwendung der Leistungskomponenten nach Zerlegung Folgendes umfasst:

wenn die Summe von $P_{non-ctrl}$, $P_{EDCH,f}$ und $GBP_{scheduled}$ eine Leistung für die Stauregelung übersteigt, Durchführen von Stauregelung.

**4.** Verfahren nach Anspruch 3, wobei
beim Durchführen (603) der grundlegenden Stauregelung die Leistung für die Stauregelung gleich $Thd_{BasicCongestion}$ mal $RTWP_{target}$ ist; und
beim Durchführen (703) der Überlast-Stauregelung die Leistung für die Stauregelung gleich $Thd_{BasicCongestion}$ mal $RTWP_{target}$ ist.

**5.** Verfahren nach Anspruch 1, wobei die Empfangsleistung GBP$_{scheduled}$ Folgendes umfasst:

die aus der GBP aller Echtzeitdienste auf dem E-DCH abgeleitete Empfangsleistung $GBP_{RT}$ und
die aus der GBP aller BE-Dienste auf dem E-DCH abgeleitete Empfangsleistung $GBP_{BE}$.

**6.** Verfahren nach Anspruch 5, wobei der Prozess des Durchführens von Aufwärtsstrecken-Lastregelung durch Verwendung der Leistungskomponenten nach Zerlegung Folgendes umfasst:

Durchführen von Aufwärtsstrecken-Zulassungskontrolle durch Verwendung der Leistungskomponenten nach Zerlegung.

**7.** Verfahren nach Anspruch 6, wobei, wenn die Zugangsanforderungen originierenden Dienste Echtzeitdienste sind, der Prozess des Durchführens von Aufwärtsstrecken-Zulassungskontrolle Folgendes umfasst:

Schätzen (202) von $\Delta P$ im Fall der Zulassung der Zugangsanforderungen originierenden Echtzeitdienste;
Beurteilen (203), ob die Summe von $P_{non-ctrl}$, $P_{EDCH,f}$, $GBP_{RT}$ und $\Delta P$ eine Leistung für die Echtzeit-Dienstzulassung übersteigt, wenn nicht, Zulassen (205) der Zugangsanforderungen originierenden Echtzeitdienste; andernfalls Zurückweisen (204) der Zugangsanforderungen originierenden Echtzeitdienste.

8. Verfahren nach Anspruch 7, wobei die Leistung für die Echtzeit-Dienstzulassung gleich $Thd_{RT}$ mal $RTWP_{target}$ ist.

9. Verfahren nach Anspruch 6, wobei, wenn die Zugangsanforderungen originierenden Dienste Echtzeitdienste auf dem DCH sind, das Durchführen von Aufwärtsstrecken-Zulassungskontrolle Folgendes umfasst:

Schätzen (402) von $\Delta P$ im Fall der Zulassung der Zugangsanforderungen originierenden Echtzeitdienste auf dem DCH;
Beurteilen (403), ob die Summe von $P_{non-ctrl}$, $P_{EDCH,f}$, $GBP_{RT}$ und $\Delta P$ eine Leistung für die Echtzeit-Dienstzulassung übersteigt und ob die Summe von $P_{non-ctrl}$ und $\Delta P$ eine Leistung für die Dienstzulassung auf dem DCH übersteigt, wenn die zwei Ergebnisse negativ sind, Zulassen (404) der Zugangsanforderungen originierenden Echtzeitdienste auf dem DCH; andernfalls Zurückweisen (405) der Zugangsanforderungen originierenden Echtzeitdienste auf dem DCH.

10. Verfahren nach Anspruch 9, wobei die Leistung für Echtzeit-Dienstzulassung gleich $Thd_{RT}$ mal $RTWP_{target}$ ist; und die Leistung für Dienstzulassung auf dem DCH gleich $Thd_{non-ctrl}$ mal $RTWP_{target}$ ist.

11. Verfahren nach Anspruch 6, wobei, wenn die Zugangsanforderungen originierenden Dienste BE-Dienste sind, der Prozess des Durchführens von Aufwärtsstrecken-Zulassungskontrolle Folgendes umfasst:

Schätzen (302) von $\Delta P$ im Fall der Zulassung von Zugangsanforderungen originierenden BE-Diensten;
Beurteilen (303), ob die Summe von $P_{non-ctrl}$, $P_{EDCH,f}$, $GBP_{RT}$, $GBP_{BE}$ und $\Delta P$ eine Leistung für die BE-Dienstzulassung übersteigt, wenn nicht, Zulassen (305) der Zugangsanforderungen originierenden BE-Dienste; andernfalls Zurückweisen (304) der Zugangsanforderungen originierenden BE-Dienste.

12. Verfahren nach Anspruch 11, wobei die Leistung für die BE-Dienstzulassung gleich $Thd_{BE}$ mal $RTWP_{target}$ ist.

13. Verfahren nach Anspruch 6, wobei, wenn die Zugangsanforderungen originierenden Dienste BE-Dienste auf dem DCH sind, der Prozess des Durchführens von Aufwärtsstrecken-Zulassungskontrolle Folgendes umfasst:

Schätzen (502) von $\Delta P$ im Fall der Zulassung der Zugangsanforderungen originierenden BE-Dienste auf dem DCH;
Beurteilen (503), ob die Summe von $P_{non-ctrl}$, $P_{EDCH,f}$, $GBP_{RT}$, $GBP_{BE}$ und $\Delta P$ eine Leistung für die BE-Dienstzulassung übersteigt und ob die Summe von $P_{non-ctrl}$ und $\Delta P$ eine Leistung für die Dienstzulassung auf dem DCH übersteigt, wenn die zwei Ergebnisse negativ sind, Zulassen (504) der Zugangsanforderungen originierenden BE-Dienste auf dem DCH; andernfalls Zurückweisen (505) der Zugangsanforderungen originierenden BE-Dienste auf dem DCH.

14. Verfahren nach Anspruch 13, wobei die Leistung für die BE-Dienstzulassung gleich $Thd_{BE}$ mal $RTWP_{target}$ ist; und die Leistung für die Dienstzulassung auf dem DCH gleich $Thd_{non-ctrl}$ mal $RTWP_{target}$ ist.

15. Vorrichtung zur Aufwärtsstrecken-Lastregelung, die eine Zerlegungseinheit und eine Lastregeleinheit umfasst, wobei die Zerlegungseinheit dafür ausgelegt ist, eine Aufwärtsstrecken-Empfangs-Gesamtbreitbandleistung in einer Zelle zu zerlegen,
die Lastregeleinheit dafür ausgelegt ist, Aufwärtsstrecken-Lastregelung durch Verwendung von Leistungskomponenten nach Zerlegung durchzuführen,
**dadurch gekennzeichnet, dass** die Zerlegungseinheit dafür ausgelegt ist, die Aufwärtsstrecken-Empfangs-Gesamtbreitbandleistung in einer Zelle durch Folgendes zu zerlegen:

Erhalten der unregelbaren Empfangsleistung $P_{non-ctrl}$, der Empfangsleistung des nichtversorgenden Enhanced Dedicated Channel E-DCH der Aufwärtsstrecke $P_{EDCH,f}$, der Empfangsleistung $GBP_{scheduled}$, die aus der minimalen erforderlichen Leistung GBP für die garantierten Bitraten aller eingeteilter Dienste auf dem E-DCH abgeleitet wird, aus der Aufwärtsstrecken-Empfangs-Gesamtbreitbandleistung $P_{total}$ in der Zelle.

**16.** Vorrichtung nach Anspruch 15, wobei die Lastregeleinheit eine Stauregeleinheit umfasst, wobei die Stauregeleinheit dafür ausgelegt ist, die Leistungskomponenten nach Zerlegung zu verwenden, um Stauregelung durchzuführen.

**17.** Vorrichtung nach Anspruch 16, wobei die Stauregeleinheit eine Triggereinheit und eine Steuereinheit umfasst; wobei die Triggereinheit dafür ausgelegt ist, die Leistungskomponenten nach Zerlegung zu verwenden, um zu beurteilen, dass die aktuelle Zellenlast die Bedingungen zum Triggern der Stauregelung erfüllt, und die Triggerinformationen zu der Steuereinheit zu senden; und

die Steuereinheit dafür ausgelegt ist, Stauregelung durchzuführen.

**18.** Vorrichtung nach Anspruch 17, wobei die Lastregeleinheit eine Zulassungskontrolleinheit umfasst; und die Zulassungskontrolleinheit dafür ausgelegt ist, die Leistungskomponenten nach Zerlegung zu verwenden, um Zulassungskontrolle durchzuführen.

**19.** Vorrichtung nach Anspruch 18, wobei die Zulassungskontrolleinheit eine Beurteilungseinheit und eine Zulassungseinheit umfasst; wobei

die Beurteilungseinheit dafür ausgelegt ist, bei der Zulassung von Zugangsanforderungen originierenden Diensten die Leistungskomponenten nach Zerlegung zu verwenden, um zu beurteilen, ob die Zellenlast die Zulassungsbedingungen erfüllt, und die Zulassungsinformationen zu der Zulassungseinheit zu senden; und

die Zulassungseinheit dafür ausgelegt ist, die Dienste zuzulassen.

**Revendications**

**1.** Procédé de commande de charge de liaison montante, comprenant :

la décomposition d'une puissance de bande large totale reçue de liaison montante dans une cellule ; et l'exécution d'une commande de charge de liaison montante en utilisant des composantes de puissance après décomposition, **caractérisé en ce que** le processus de décomposition de la puissance de bande large totale reçue de liaison montante dans une cellule comprend :

l'obtention, à partir de la puissance de bande large totale reçue de liaison montante, $P_{total}$, dans la cellule, de la puissance de réception incontrôlable, $P_{non\text{-}ctrl}$, de la puissance de réception du canal dédié rehaussé non de desserte de liaison montante, E-DCH, $P_{EDCH,f}$, de la puissance de réception, $GBP_{scheduled}$, dérivée de la puissance requise minimum, GBP, pour les débits binaires garantis de tous les services ordonnancés sur l'E-DCH.

**2.** Procédé selon la revendication 1, dans lequel le processus d'exécution de la commande de charge de liaison montante en utilisant des composantes de puissance après décomposition comprend :

l'exécution (603, 703) d'une commande d'encombrement en utilisant les composantes de puissance après décomposition.

**3.** Procédé selon la revendication 2, dans lequel le processus d'exécution d'une commande d'encombrement en utilisant les composantes de puissance après décomposition comprend :

si la somme de $P_{non\text{-}ctrl}$, $P_{EDCH,f}$ et $GBP_{scheduled}$ dépasse une puissance de commande d'encombrement, l'exécution de la commande d'encombrement.

**4.** Procédé selon la revendication 3, dans lequel

lors de l'exécution (603) de la commande d'encombrement de base, la puissance de commande d'encombrement est égale à $Thd_{BasicCongestion}$ fois $RTWP_{target}$;

lors de l'exécution (703) de la commande d'encombrement pour surcharge, la puissance de commande d'encombrement est égale à $Thd_{OverloadCongestion}$ fois $RTWP_{target}$.

**5.** Procédé selon la revendication 1, dans lequel la puissance de réception $GBP_{scheduled}$ comprend :

la puissance de réception dérivée de la GBP de tous les services en temps réel sur l'E-DCH, $GBP_{RT}$, et la puissance de réception dérivée de la GBP de tous les services BE sur l'E-DCH, $GBP_{BE}$.

**6.** Procédé selon la revendication 5, dans lequel le processus d'exécution de la commande de charge de liaison montante en utilisant les composantes de puissance après décomposition comprend :

l'exécution de la commande d'admission à la liaison montante en utilisant les composantes de puissance après décomposition.

**7.** Procédé selon la revendication 6, dans lequel quand les services lançant des requêtes d'accès sont des services en temps réel, le processus d'exécution de la commande d'admission à la liaison montante comprend :

l'estimation (202) de $\Delta P$ en cas d'admission de services en temps réel lançant des requêtes d'accès ;
le jugement (203) si la somme de $P_{non-ctrl}$, $P_{EDCH,f}$, $GBP_{RT}$ et $\Delta P$ dépasse ou non une puissance d'admission de services en temps réel, dans la négative, l'admission (205) des services en temps réel lançant des requêtes d'accès ; dans l'affirmative, le rejet (204) des services en temps réel lançant des requêtes d'accès.

**8.** Procédé selon la revendication 7, dans lequel la puissance d'admission de services en temps réel est égale à $Thd_{RT}$ fois $RTWP_{target}$.

**9.** Procédé selon la revendication 6, dans lequel quand les services lançant des requêtes d'accès sont des services en temps réel sur le DCH, l'exécution de la commande d'admission à la liaison montante comprend :

l'estimation (402) de $\Delta P$ en cas d'admission de services en temps réel lançant des requêtes d'accès sur le DCH ;
le jugement (403) si la somme de $P_{non-ctrl}$, $P_{EDCH,f}$ et $GBP_{RT}$ et $\Delta P$ dépasse ou non une puissance d'admission de services en temps réel sur le DCH, et si la somme de $P_{non-ctrl}$ et $\Delta P$ dépasse ou non une puissance d'admission de services sur le DCH, si les deux résultats sont négatifs, l'admission (404) des services en temps réel lançant des requêtes d'accès sur le DCH ; sinon, le rejet (405) des services en temps réel lançant des requêtes d'accès sur le DCH.

**10.** Procédé selon la revendication 9, dans lequel la puissance d'admission de services en temps réel est égale à $Thd_{RT}$ fois $RTWP_{target}$ ; et
la puissance d'admission de services sur le DCH est égale à $Thd_{non-ctrl}$ fois $RTWP_{target}$.

**11.** Procédé selon la revendication 6, dans lequel quand les services lançant des requêtes d'accès sont des services BE, le processus d'exécution de la commande d'admission à la liaison montante comprend :

l'estimation (302) de $\Delta P$ en cas d'admission de services BE lançant des requêtes d'accès ;
le jugement (303) si la somme de $P_{non-ctrl}$, $P_{EDCH,f}$, $GBP_{RT}$, $GBP_{BE}$ et $\Delta P$ dépasse ou non une puissance d'admission de services BE, dans la négative, l'admission (305) des services BE lançant des requêtes d'accès ; dans l'affirmative, le rejet (304) des services BE lançant des requêtes d'accès.

**12.** Procédé selon la revendication 11, dans lequel la puissance d'admission de services BE est égale à $Thd_{BE}$ fois $RTWP_{target}$.

**13.** Procédé selon la revendication 6, dans lequel quand les services lançant des requêtes d'accès sont des services BE sur le DCH, le processus d'exécution de la commande d'admission à la liaison montante comprend :

l'estimation (502) de $\Delta P$ en cas d'admission des services BE lançant des requêtes d'accès sur le DCH ;
le jugement (503) si la somme de $P_{non-ctrl}$, $P_{EDCH,f}$, $GBP_{RT}$, $GBP_{BE}$ et $\Delta P$ dépasse ou non une puissance d'admission de services BE sur le DCH, et si la somme de $P_{non-ctrl}$ et $\Delta P$ dépasse ou non une puissance d'admission de services sur le DCH, si les deux résultats sont négatifs, l'admission (504) des services BE lançant des requêtes d'accès sur le DCH; sinon, le rejet (505) des services BE lançant des requêtes d'accès sur le DCH.

**14.** Procédé selon la revendication 13, dans lequel la puissance d'admission de services BE est égale à $Thd_{BE}$ fois $RTWP_{target}$; et
la puissance d'admission de services sur le DCH est égale à $Thd_{non-ctrl}$ fois $RTWP_{target}$.

**15.** Appareil de commande de charge de liaison montante, comprenant une unité de décomposition et une unité de commande de charge, dans lequel l'unité de décomposition est adaptée pour décomposer une puissance de bande large totale reçue de liaison montante dans une cellule ;
l'unité de commande de charge est adaptée pour exécuter une commande de charge de liaison montante en utilisant des composantes de puissance après décomposition ; **caractérisé en ce que**
l'unité de décomposition est adaptée pour décomposer la puissance de bande large totale reçue de liaison montante dans une cellule en obtenant, à partir de la puissance de bande large totale reçue de liaison montante, $P_{total}$, dans la cellule, la puissance de réception incontrôlable, $P_{non\text{-}ctrl}$, la puissance de réception du canal dédié rehaussé non de desserte de liaison montante, E-DCH, $P_{EDCHF}$, la puissance de réception, $GBP_{scheduled}$ dérivée de la puissance requise minimum, GBP, pour les débits binaires garantis de tous les services ordonnancés sur l'E-DCH.

**16.** Appareil selon la revendication 15, l'unité de commande de charge comprenant une unité de commande d'encombrement, l'unité de commande d'encombrement étant adaptée pour utiliser les composantes de puissance après décomposition afin d'exécuter la commande d'encombrement.

**17.** Appareil selon la revendication 16, dans lequel l'unité de commande d'encombrement comprend une unité de déclenchement et une unité de commande ; dans lequel
l'unité de déclenchement est adaptée pour utiliser les composantes de puissance après décomposition afin de juger que la charge de cellule courante satisfait les conditions de déclenchement de la commande d'encombrement et envoyer les informations de déclenchement à l'unité de commande ; et
l'unité de commande est adaptée pour exécuter la commande d'encombrement.

**18.** Appareil selon la revendication 17, dans lequel l'unité de commande de charge comprend une unité de commande d'admission, et l'unité de commande d'admission est adaptée pour utiliser les composantes de puissance après décomposition pour exécuter la commande d'admission.

**19.** Appareil selon la revendication 18, dans lequel l'unité de commande d'admission comprend une unité de jugement et une unité d'admission, dans lequel l'unité de jugement est adaptée pour utiliser les composantes de puissance après décomposition afin de juger si la charge de la cellule satisfait ou non les conditions d'admission à l'admission de services lançant des requêtes d'accès et envoyer les informations d'admission à l'unité d'admission ; et
l'unité d'admission est adaptée pour admettre les services.

$P_{total}$

| | | | |
|---|---|---|---|
| | | $P_e$ | Compressible power |
| | $GBP_{BE}$ | | Receiving power derived from the GBP of all BE services on the E-DCH |
| $P_{EDCH,s}$ | $GBP_{RT}$ | | Receiving power derived from the GBP of all real-time services on the E-DCH |
| | $P_{EDCH,f}$ | | Receiving power of uplink non-serving E-DCH |
| | $P_{EDCH,ns}$ | | Receiving power derived from non-scheduled services on the E-DCH |
| $P_{non-ctrl}$ | $P_{other}$ | | Uplink receiving power derived from channels other than the E-DCH |
| | $P_f$ | | Neighbor interference |
| | $P_N$ | | Heat noise |

Figure 1

201

Obtain $P_{non-ctrl}$, $P_{EDCH,f}$ and $GBP_{RT}$ from current $P_{total}$.

202

Estimate $\Delta P$ in the case of admission of real-time services originating access requests on the E-DCH.

203

Judge whether the sum of $P_{non-ctrl}$, $P_{EDCH,f}$, $GBP_{RT}$ and $\Delta P$ exceeds the specified power for the real-time service admission.

No

Yes

204

Reject the real-time services originating access requests on the E-DCH.

205

Admit the real-time services originating access requests on the E-DCH.

Figure 2

301

Obtain $P_{non-ctrl}$, $P_{EDCH,J}$, $GBP_{RT}$, and $GBP_{BE}$ from current $P_{total}$.

302

Estimate $\Delta P$ in the case of admission of BE services originating the access requests on the E-DCH.

303

Judge whether the sum of $P_{non-ctrl}$, $P_{EDCH,f}$, $GBP_{RT}$, $GBP_{BE}$, and $\Delta P$ exceeds the specified power for the BE service admission.

No

Yes

304

Reject the BE services originating access requests on the E-DCH.

305

Admit the BE services originating access requests on the E-DCH.

Figure 3

401

Obtain $P_{non-ctrl}$, $P_{EDCH,f}$ and $GBP_{RT}$ from current $P_{total}$.

402

Estimate $\Delta P$ in the case of admission of real-time services originating access requests on the DCH.

403

Judge whether the sum of $P_{non-ctrl}$, $P_{EDCH,f}$, $GBP_{RT}$, and $\Delta P$ exceeds the specified power for the real-time service admission and whether the sum of $P_{non-ctrl}$ and $\Delta P$ exceeds the power for the service admission on the DCH.

Both results are negative.

At lease one result is positive.

404

Admit the real-time services originating access requests on the DCH.

405

Reject the real-time services originating access requests on the DCH.

Figure 4

501

Obtain $P_{non-ctrl}$, $P_{EDCH,f}$, $GBP_{RT}$, and $GBP_{BE}$ from current $P_{total}$.

502

Estimate $\Delta P$ in the case of admission of the BE services originating the access requests on the DCH.

503

Judge whether the sum of $P_{non-ctrl}$, $P_{EDCH,f}$, $GBP_{RT}$, $GBP_{BE}$, and $\Delta P$ exceeds the specified power for the BE service admission and whether the sum of $P_{non-ctrl}$ and $\Delta P$ exceeds the specified power for the service admission on the DCH.

At lease one result is positive.

Both results are negative.

504

Admit the BE services originating access requests on the DCH.

505

Reject the BE services originating access requests on the DCH.

Figure 5

Obtain $P_{non-ctrl}$, $P_{EDCH,f}$ and $GBP_{scheduled}$ from current $P_{total}$. — 601

Wait for a period of time

Judge whether the sum of $P_{non-ctrl}$, $P_{EDCH,f}$ and $GBP_{scheduled}$ exceeds the specified power for the basic congestion control. — 602

No

Yes — 603

Perform basic congestion control in the current cell.

Figure 6

Obtain $P_{non-ctrl}$, $P_{EDCH,f}$ and $GBP_{scheduled}$ from current $P_{total}$ — 701

Wait for a period of time

Judge whether the sum of $P_{non-ctrl}$, $P_{EDCH,f}$ and $GBP_{scheduled}$ exceeds the specified power for the overload congestion control. — 702

No

Yes — 703

Perform overload congestion control in the current cell.

Figure 7

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006077141 A1